# EUROPÄISCHE PATENTSCHRIFT

(11) **EP 2 043 491 B1**
(45) Veröffentlichungstag und Bekanntmachung des Hinweises auf die Patenterteilung: **20.10.2010**
(21) Anmeldenummer: 07786773.7
(22) Anmeldetag: 20.06.2007
(51) Int. Cl.: A47J 31/42, A47J 42/38

(54) **LUFTSCHALLGEDÄMMTE LEBENSMITTELMÜHLE**
SOUND-INSULATED FOOD MILL
MOULIN INSONORISÉ POUR PRODUITS ALIMENTAIRES

(30) Priorität: 14.07.2006 DE 102006032709
(43) Veröffentlichungstag der Anmeldung: 08.04.2009
(73) Patentinhaber: BSH Bosch und Siemens Hausgeräte GmbH, 81739 München (DE)
(72) Erfinder: HOLZER, Stefan, 73430 Aalen (DE); BÄR, Winfried, 89551 Königsbronn (DE); FREITAG, Dietmar, 09394 Hohndorf (DE); FÖRSTER, Gerd, 09120 Chemnitz (DE)
(86) Internationale Anmeldenummer: PCT/EP2007/056122
(87) Internationale Veröffentlichungsnummer: WO 2008/006676

(56) Entgegenhaltungen:
- DE-A1- 3 318 302
- US-A1- 2002 047 061
- US-A1- 2003 042 069

## Beschreibung

Die Erfindung betrifft eine Lebensmittelmühle, insbesondere eine Kaffeemühle für einen Kaffeevollautomaten, mit einem Mahlgutbehälter zur Aufnahme von Körnern oder Bohnen, einem Mahlwerk, einem Mahlwerksraum zur Aufnahme des Mehls und einem Antriebsmotor, wobei der Antriebsmotor innerhalb des Mahlgutbehälters angeordnet ist.

Vereinfachend ist nur vom Motor die Rede, worin das Getriebe, das neben dem Motor eine weitere wesentliche Emissionsquelle darstellt, mit eingeschlossen sein soll. Denn vor allem als Planetengetriebe erzeugt es nennenswerte Emissionen. Die Ausgestaltungen von Mahlgutbehältern und Mahlwerksräumen können grundsätzlich voneinander abweichen, je nachdem, ob es sich bei der Lebensmittelmühle um ein separates Gerät oder um eine Mühle innerhalb eines Kaffeevollautomaten handelt. Eine separate Mühle, zum Beispiel eine Getreidemühle oder Handkaffeemühle, wird nach jedem Betrieb vollständig entleert. Bei ihr kommt es darauf an, dass sie ein relativ großes Volumen an Mahlgut in einem Arbeitsgang möglichst schnell mahlt. Demzufolge muss der Mahlwerksraum verhältnismäßig groß ausgebildet sein. Demgegenüber braucht der Mahlgutbehälter nur relativ klein dimensioniert zu sein, da er ohnehin für jeden Mahlgang extra beladen wird. Bei Handkaffeemühlen fallen Mahlgutbehälter und Mahlwerksraum in der Regel zusammen, sind also gleich groß. Eine in einem anderen Gerät integrierte Mühle, zum Beispiel das Mahlwerk eines Kaffeevollautomaten, mahlt dagegen meist nur kleine Portionen, in der Regel nur eine Tassenportion. Dementsprechend klein kann der Mahlwerksraum ausfallen. Er wird in der Regel über einen Mahlgutbehälter beschickt, der nicht für jeden Mahlgang separat, sondern für mehrere Mahlgänge mit einem oder zwei Pfund Kaffeebohnen beladen wird. Der Mahlgutbehälter ist also gegenüber dem Mahlwerksraum groß ausgebildet.

Kaffeevollautomaten sind wegen ihrer Bedienungsfreundlichkeit beliebte und weit verbreitete Ausstattungsgegenstände in Wohnungen und Büros. Ihre Akzeptanz leidet jedoch unter der Geräuschentwicklung, die ihre Benutzung hervorrufen kann. Vor allem in Bereichen, in denen konzentriert gearbeitet oder häufig mit Kundschaft telefoniert wird, ist das Bedienungsgeräusch von lauten Kaffeevollautomaten sehr störend.

Die akustisch hervorstechendste Geräuschquelle beim Betrieb einer Lebensmittelmühle ist das Mahlwerk bei einer ersten Zerkleinerungsstufe, nämlich beim Brechen der Körner oder Bohnen. Akustisch an zweiter Stelle liegt der Antriebsmotor des Mahlwerks samt seinem Getriebe. An dritter Stelle folgt das Mahlwerk bei der zweiten Zerkleinerungsstufe, nämlich beim Mahlen bzw. Zerreiben der Körner oder Bohnen. Diese Geräuschquellen produzieren Emissionen von zwei grundsätzlich zu unterscheidenden Arten: Luft- und Körperschallemissionen. Luftschallemissionen beruhen auf in Schwingungen versetzte Umgebungsluft, die als solche unmittelbar an das menschliche Ohr gelangt. Körperschallemissionen dagegen beruhen auf Erschütterungen und Vibrationen von Geräteteilen, die ihrerseits ihre Umgebungsluft in Vibrationen versetzen und dadurch so genannten sekundären Luftschall hervorrufen. Erst diese und nicht die Körperschallwellen selbst sind für das menschliche Ohr wahrnehmbar.

Die DE 33 183 02 C2 offenbart eine Kaffeemaschine der eingangs genannten Art. Aus hygienischen Gründen, nämlich um insbesondere das aus einem Gehäuse und einem Schlagmesser bestehende Mahlwerk leicht reinigen zu können, ist das Gehäuse an einem Tragteil lösbar befestigt. Da das Schlagmesser direkt unterhalb des Motors angeordnet ist, ist der Motor innerhalb des Gehäuses und direkt am Tragteil befestigt. Die Motoraußenwandung und die Gehäuseinnenwandung definieren also einen Aufnahmeraum für Kaffeebohnen. Damit der Motor schwingungsfrei und möglichst geräuscharm arbeiten kann, ist er am Tragteil elastisch gelagert. Dennoch ist die Geräuschentwicklung dieser Kaffeemaschine noch erheblich.

Es ist daher Aufgabe der vorliegenden Erfindung, eine elektrische Lebensmittelmühle anzugeben, deren Schallabstrahlung weiter reduziert ist.

Die Erfindung löst diese Aufgabe bei einer Lebensmittelmühle der eingangs genannten Art dadurch, dass der in einem Dämmgehäuse luftschallgedämmt gekapselte Motor zusammen mit dem Mahlwerksraum und dem Mahlgutbehälter in einem gemeinsamen Dämmgehäuse angeordnet ist, dass das Dämmgehäuse in einem Gerätegehäuse elastisch gelagert ist, und dass das Dämmgehäuse doppelwandig aus einem Außengehäuse und einem Innengehäuse ausgebildet ist.

Dadurch wird erreicht, dass nicht nur die Entwicklung von Körperschall infolge von Schwingungen und Vibrationen gedämmt wird. Die Erfindung verfolgt vielmehr das Prinzip, auch die unmittelbare, als Luftschall übertragene Geräuschentwicklung beim Betrieb des Motors zu dämmen. Der Motor erhält also ein separates, im Wesentlichen luft- und damit schalldichtes Gehäuse.

Erfindungsgemäß ist der Motor zusammen mit dem Mahlwerksraum und dem Mahlgutbehälter in einem gemeinsamen luftdichten Dämmgehäuse angeordnet. Damit sind die beiden wesentlichen Geräuschquellen, nämlich der Motor einerseits und das Mahlwerk andererseits im Mahlwerksraum geräuschdicht gekapselt. Mitgedämmt wird außerdem der Mahlgutbehälter, nämlich gegen Körperschall. Denn je nach Bauart der Maschine kann er oft nicht oder nur mit erheblichem technischen Aufwand gegen die Übertragung von Vibrationen vom Mahlwerksraum getrennt werden. Motor, Mahlgutbehälter und Mahlwerksraum können dazu eine kompakte Baueinheit bilden. Ein Schallaustritt an den Übergängen zwischen den einzelnen Baugruppen der Baueinheit, zum Beispiel zwischen dem Motor und dem Mahlwerksraum oder zwischen dem Mahlgutbehälter und dem Mahlwerksraum, ist damit so gut wie ausgeschlossen. Ist der Motor im Mahlgutbehälter angeordnet, kann darüber hinaus der Mahlgutbehälter zugleich das Dämmgehäuse für den Motor darstellen, so dass auf ein separates Dämmgehäuse für den Motor verzichtet werden kann.

Das Dämmgehäuse muss eine Beladeöffnung aufweisen, über die der Mahlgutbehälter befüllt werden kann. Dient der Mahlgutbehälter zugleich als Dämmgehäuse, kann er mit einem Deckel luftdicht verschließbar ausgebildet werden, um seine Wirkung als Dämmgehäuse sicherzustellen. Mangels Luftaustauschs kann kein Luftschall entweichen. Zugleich schützt der luftdicht verschlossene Mahlgutbehälter wirkungsvoll das Aroma des in ihm gelagerten Mahlguts.

Nach einer weiteren vorteilhaften Ausgestaltung der Erfindung ist die Innenseite des Dämmgehäuses zumindest bereichsweise mit einem Luftschall absorbierenden Material belegt. Das Material absorbiert also den Schall, bevor er die Wandungen des Dämmgehäuses erreichen und sie in Schwingungen versetzen kann. Eine unerwünschte Schallabstrahlung des Dämmgehäuses in Form von sekundärem Luftschall ist dadurch zumindest reduziert.

Eine weitere Möglichkeit, die Schalldämmeigenschaften des Dämmgehäuses zu verbessern, besteht nach einer weiteren vorteilhaften Ausgestaltung der Erfindung darin, dass das Dämmgehäuse aus einem Material mit hoher innerer Dämpfung besteht. Dabei handelt es sich um ein unelastisches, quasi gelartiges Material, das einer auf sie einwirkenden Kraft kaum eine Rückstellkraft entgegenstellt. Ein derartiges Material ist durch eine hohe Kerbschlagzähigkeit gekennzeichnet. Dafür kommen ein weiches Polyurethan, thermoplastisches Polyethylen (TPE) oder ein hartes Silikon in Frage. Sie sollten im Sinne einer einfachen Verarbeitbarkeit für Spritzgießverfahren geeignet sein. Diese Werkstoffe dämpfen vor allem hohe Frequenzen, die als besonders unangenehm empfunden werden. Tiefere Frequenzen dagegen können durchaus erhalten bleiben und sind in Maßen sogar erwünscht, weil sie dem Benutzer die Vorgänge innerhalb eines Kaffeevollautomaten akustisch nachvollziehbar machen. Der Benutzer erwartet also gewisse Mahlgeräusche, weshalb sie nicht vollkommen eliminiert werden müssen.

Stromab des Mahlwerkraums befindet sich in aller Regel eine Abgabeöffnung zur Abgabe des Mehls. Bei Getreidemühlen mündet eine derartige Abgabeöffnung in der Regel in einen Stutzen, der das Mehl in eine bereitgestellte Schale leitet. Bei Mahlwerken für Kaffeevollautomaten gelangt das Kaffeemehl über die Abgabeöffnung und einen daran anschließenden Schacht in eine Brühkammer. Um die Schallabstrahlung auch über diese Öffnung wenigstens zu reduzieren, ist die Abgabeöffnung bei einer weiteren vorteilhaften Ausgestaltung der Erfindung zumindest zeit- oder wahlweise verschließbar. Voraussetzung für einen Verschluss der Abgabeöffnung während des gesamten Mahlvorgangs ist ein entsprechender groß dimensionierter Pufferraum zur Aufnahme des frischen Mehls vor der Abgabeöffnung. Steht er, etwa bei Kaffeevollautomaten für den Hausgebrauch, nicht zur Verfügung, kann eine separate Steuerung die Abgabeöffnung bedarfsgerecht öffnen, damit es nicht zu einem Stau des Mehls bzw. Verstopfen des Mahlwerks kommt. Wenigstens solange die Abgabeöffnung verschlossen ist, ist die Schallemission aus dem Mahlwerksraum deutlich reduziert. Eine derartige Steuerung kann zeitabhängig arbeiten. Auch ein manuelles Öffnen der Abgabeöffnung ist denkbar. Dazu kann dem Benutzer eine Füllstandsanzeige, im einfachsten Fall ein Schauglas anzeigen, wann die Abgabeöffnung freigegeben werden muss.

Nach einer weiteren vorteilhaften Ausgestaltung der Erfindung ist der Motor am Mahlgutbehälter selbst befestigt. Diese Anordnung vereinfacht die Montage der Mühle, weil keine jeweils separaten Halterungen für den Motor einerseits und den Mahlgutbehälter andererseits montiert werden müssen. Dies ist umso bedeutsamer, als Mahlgutbehälter und Motor durch ihre Anordnung ineinander auf engstem Raum montiert werden. Vielmehr können sie nach Montage des Motors in dem Mahlgutbehälter als Baugruppe wesentlich einfacher in einem Arbeitsschritt befestigt werden.

Nach einer weiteren vorteilhaften Ausgestaltung der Erfindung ist der Motor im Mahlgutbehälter elastisch gelagert. Dadurch wird die Übertragung von Vibrationen des Motors auf das Mahlgut und den Mahlgutbehälter vermieden. Andernfalls könnten sie zum Beispiel zu einem Klappern der Kaffeebohnen im Bohnenbehälter und dadurch zu einer weiteren Schallquelle führen.

Das Dämmgehäuse ist gemäß der vorliegenden Erfindung innerhalb eines Gerätegehäuses der Mühle oder des Kaffeevollautomaten elastisch gelagert. Schwingungen und Vibrationen, denen das Dämmgehäuse, sei es das des Motors oder das der ganzen Baueinheit aus Motor, Mahlwerk und Mahlgutbehälter, unterliegt, werden dadurch nicht an das Gerätegehäuse der Mühle bzw. des Kaffeevollautomaten weitergeleitet. Der Motor bzw. die Baueinheit sind demzufolge innerhalb der Mühle zusätzlich auch gegen Körperschall gedämmt.

Eine derartige elastische Lagerung kann dadurch erzielt werden, dass die Baueinheit bzw. der Motor an diskreten Lagerungspunkten über elastische Elemente gegenüber dem Gerätegehäuse schwingungstechnisch entkoppelt ist. Das Dämmgehäuse ist doppelwandig aus einem Außengehäuse und einem Innengehäuse ausgebildet. Das Innengehäuse kann dann von dem Mahlgutbehälter gebildet sein, das von einem Außengehäuse vollständig umgeben ist. Die elastische Lagerung des Motors bzw. der Baueinheit kann dann auf einfache Weise durch die Anordnung plattenförmigen elastischen Materials in dem Luftspalt zwischen Außen- und Innengehäuse hergestellt werden. Sind beide Gehäuse vollkommen geschlossen ausgeführt, wird dadurch zusätzlich zur Körperschalldämmung auch eine effektive Luftschalldämmung erreicht.

Die Schalldämmung kann noch dadurch gesteigert werden, dass nach einer weiteren vorteilhaften Ausgestaltung der Erfindung die Eigenfrequenzen des Außengehäuses und des Innengehäuses gegeneinander verstimmt sind. Luftschall, der eines der beiden Gehäuse in Schwingungen versetzt und damit zu einer eigenen Schallquelle werden lässt, versetzt nicht automatisch auch das jeweils andere Gehäuse in Schwingungen. Eine Verstimmung bei gleichem Material kann etwa durch unterschiedliche Dicken der Wandungen des Außen- und des Innengehäuses erzielt werden. Alternativ können bei gleichen Dicken unterschiedlich weiche Materialien für die Gehäuse verwendet werden. Da im Innengehäuse auch der Motor befestigt sein kann, empfiehlt sich für das Innengehäuse das härtere und für das Außengehäuse das weichere Material. Eine Verstimmung der beiden Gehäuse kann bei gleichem Material und gleichen Wanddicken auch durch voneinander abweichende Abmessungen erreicht werden. Vollständig ineinander angeordnete Gehäuse weisen ohnehin voneinander abweichende Abmessungen auf.

Das Prinzip der Erfindung wird im Folgenden anhand einer Zeichnung beispielshalber noch näher erläutert. In der Zeichnung zeigen:
- Figur 1:: eine Explosionsdarstellung einer erfindungsgemäßen Baueinheit ohne Deckel,
- Figur 2:: eine Draufsicht auf die Baueinheit,
- Figur 3:: einen Längsschnitt durch die Baueinheit gemäß der Schnittlinie II-II in Figur 2,
- Figur 4:: einen Querschnitt durch die Baueinheit gemäß der Schnittlinie III-III in Figur 2,
- Figur 5:: eine Detailansicht aus Figur 3.

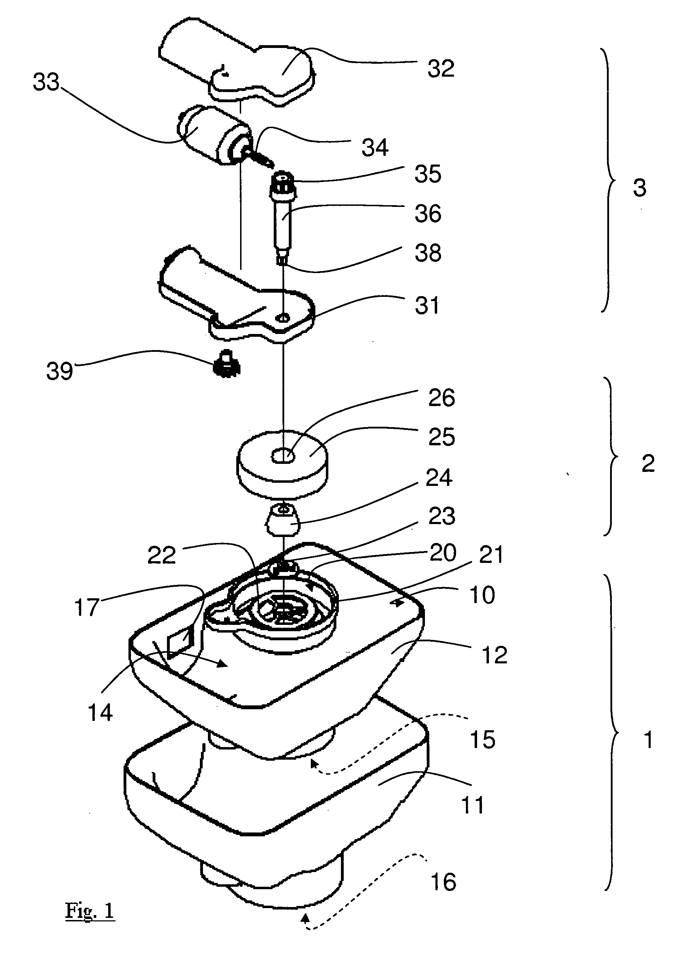

Die erfindungsgemäße Lebensmittelmühle umfasst einen Behälter 1, ein Mahlwerk 2 und einen Antrieb 3. Sie ist in Figur 1 ohne Deckel für eine Beladeöffnung 10 dargestellt. Der Behälter 1 besteht aus Kunststoff und ist doppelschalig ausgebildet. Er umfasst einen Außenbehälter 11 als Außenschale und einen Innenbehälter 12 als Innenschale. Der Innenbehälter 12 stellt zugleich einen Mahlgutbehälter dar, in dessen Innenraum 14 unter anderem etwa ein Kilogramm Kaffeebohnen aufgenommen werden können. Der Innenbehälter 12, das Mahlwerk 2 und der Antrieb 3 stellen eine Baueinheit dar. An einer seiner Langseiten weist der Innenbehälter 12 eine Montageaussparung 17 und an seiner Unterseite eine in dieser Darstellung nicht erkennbare kreisrunde Abgabeöffnung 15 auf, die mit einer ebenso kreisrunden Abgabeöffnung 16 an der Unterseite des Außenbehälters 11 fluchtet.

Das Mahlwerk 2 umfasst ein flaches, im Wesentlichen zylindrisches Mahlwerksgehäuse 21 aus Kunststoff. Es umschließt einen Mahlwerksraum 20, der deutlich kleiner ist als der Innen- bzw. Mahlgutbehälter 12. Im Mahlwerksraum 20 befindet sich eine feststehende und stabile Zentrierscheibe 22 aus Metall, eine Kunststoff-Gleitlagerscheibe 23 für einen Mahlkegel 24 und ein Mahlring 25 mit einer zentralen Aufgabeöffnung 26.

Der Antrieb 3 schließt in einem Gehäuse aus einem Aufnahmeunterteil 31 und einem Aufnahmeoberteil 32 einen Elektromotor 33 luftdicht ein. Er ist über nicht dargestellte Gummielemente innerhalb des Unterteils 31 und Oberteils 32 mit geringem Federweg elastisch gelagert und wirkt über ein Getriebe aus einer Schnecke 34 und einem Schneckenrad 35 auf eine Welle 36. Sowohl der Motor 33 als auch das Getriebe 34, 35 sind in dem Aufnahmeunter- und -oberteil 31, 32 gelagert. Die Lagerung sichert den korrekten Achsabstand und Zahneingriffswinkel und damit neben den reduzierten Zahneingriffsgeräuschen einen hohen Wirkungsgrad und eine lange Lebensdauer von Motor 33 und Getriebe 34, 35.

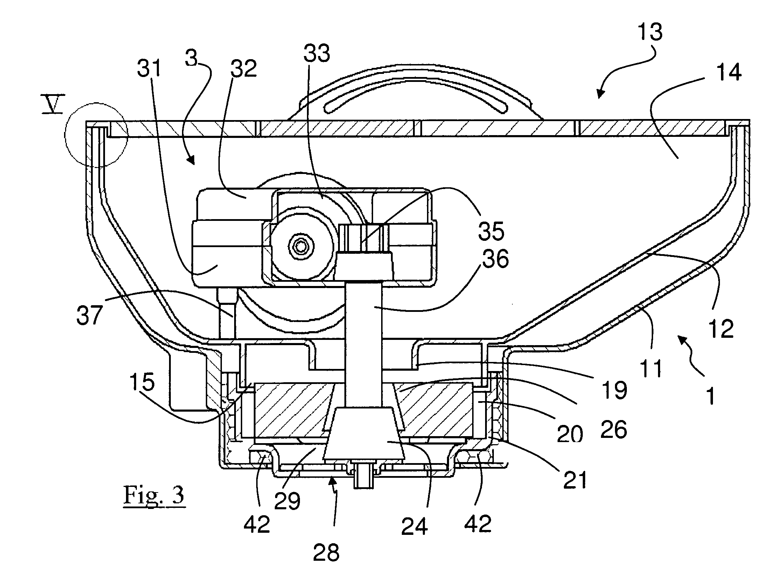

Damit die Lagerung das einwandfreie Eingreifen der Schnecke 34 in das Schneckenrad 35 gewährleisten kann, bestehen das Aufnahmeunter- und -oberteil 31, 32 aus einem verwindungssteifen Kunststoff. Sie sind in der Montageaussparung 17 am Innenbehälter 12 eingeclipst. An seinem gegenüberliegenden Ende stützen sich das Aufnahmeunter- und -oberteil 31, 32 zugfest über Stützen auf dem Innenbehälter 12 ab, von denen eine Stütze 37 nur in Figur 3 zu erkennen ist.

Am Aufnahmeunterteil 31 ist außerdem eine Rändelmutter 39 zur im Übrigen nicht näher erläuterten Verstellung des Mahlwerks 2 angeordnet.

Die Welle 36 besitzt an ihrem dem antriebsseitigen Schneckenrad 35 gegenüberliegenden abtriebseitigen Ende einen Vierkant 38. Sie erstreckt sich durch die Aufgabeöffnung 26 der Mahlscheibe 25 hindurch und greift mittels des Vierkants 38 in den Mahlkegel 24 ein. Jener ist über die Gleitlagerscheibe 23 auf der metallenen Zentrierscheibe 22 und dem Mahlwerksgehäuse 21 drehbar gelagert. Die Gleitlagerscheibe 23 besteht aus einem hochdichten Polyethylen (HDPE) oder einem Polyoxymethylen/Polyacetat (POM), damit sie sich unter Reibung auf dem Metall nicht verflüssigt (verschweißt). Die Gleitlagerung im Mahlwerk 2 macht eine Kugellagerung entbehrlich, die anfälliger gegen Verschmutzung durch kleine Partikel ist.

Das Mahlwerk 2 und der Antrieb 3 sind vollständig innerhalb des Behälters 1 und dort im Innenraum 14 des Innenbehälters 12 angeordnet. Eine direkte Verbindung des Mahlwerks 2 oder des Antriebs 3 zum Außengehäuse 11 besteht nicht. Eine körperschalltechnische Anregung durch Erschütterungen oder Luftschall sowohl des Mahlwerks 2 als auch des Antriebs 3 bekommt also nur der Innenbehälter 12, Luftschall nur ein Deckel 13 (siehe Figur 3).

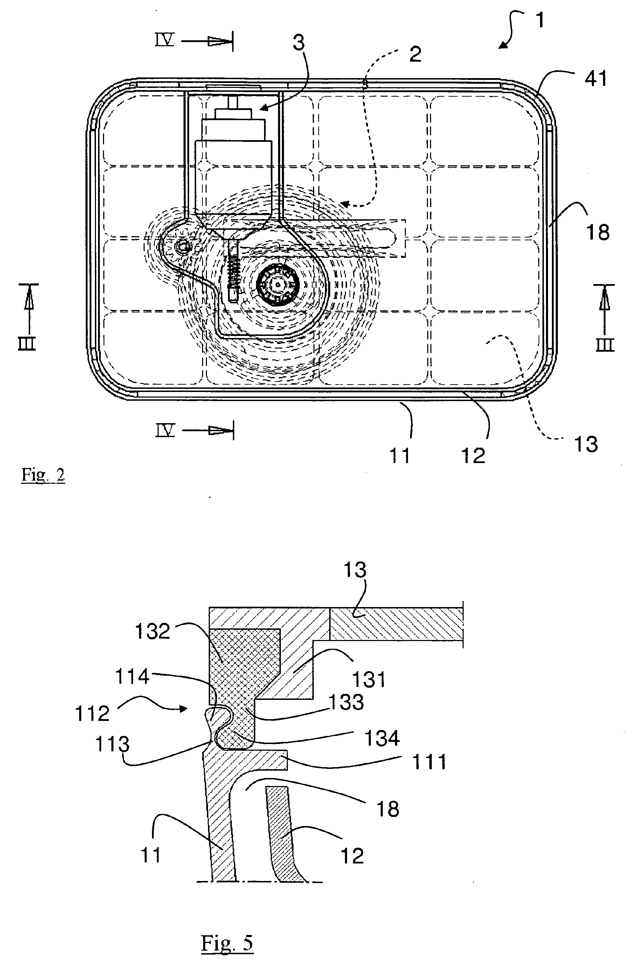

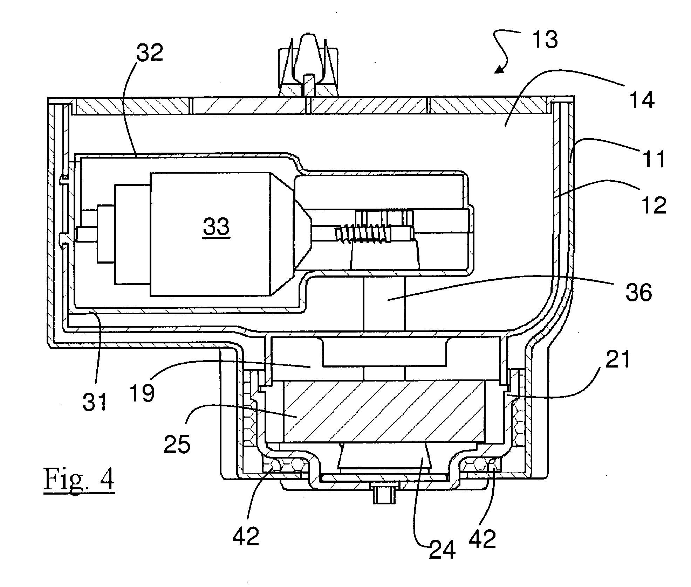

Figur 2 bietet eine Draufsicht auf die Baueinheit, um die relative Lage des Antriebs 3 und des Mahlwerks 2 innerhalb des Behälters 1 zu verdeutlichen, und stellt außerdem den Verlauf der Schnittansichten gemäß den Figuren 3 und 4 dar.

Zwischen Innenbehälter 12 und Außenbehälter 11 besteht ein Luftspalt 18. Er wird durch Streifen 41 aus elastischem Material aufrechterhalten, die auf der Innenseite des Außenbehälters 11 in dessen abgerundeten Eckbereichen aufgeklebt sind.

Figur 3 verdeutlicht in einem Längsschnitt die relative Lage der in Figur 1 dargestellten Einzelteile zueinander. Der Außenbehälter 11 nimmt den Innenbehälter 12 bzw. den Mahlgutbehälter vollständig auf, um einen im Wesentlichen doppelschaligen Behälter 1 auszubilden. Der Deckel 13 verschließt den Behälter 1 luftdicht. Im Innenraum 14 des Innenbehälters 12 befinden sich der Antrieb 3 und das Mahlwerk 2. Das teilgeschnittene Aufnahmeoberteil 32 und -unterteil 31 geben den Blick frei auf den Motor 33 aus der Richtung der ihm angeschlossenen Schnecke 34. Sie steht über das Schneckenrad 35 in Eingriff mit der Welle 36, die durch die Aufgabeöffnung 26 des feststehenden Mahlrings 25 hindurch den Mahlkegel 24 antreibt. An ihrem abtriebsseitigen Ende ist die Welle 36 im Mahlwerksgehäuse 21 drehbar gelagert.

Anders als es Figur 1 vermuten lässt, ist das Mahlwerksgehäuse 21 unterhalb des Innenbehälters 12 angeordnet und verschließt dessen Abgabeöffnung 15. Es bildet gleichsam dessen untere Fortsetzung und ragt mit einem eingezogenen Lagerbereich 27 noch durch die Abgabeöffnung 16 des Außenbehälters 11 hindurch. Im unteren Bereich des Behälters 1 wird also seine Doppelschaligkeit durch den Außenbehälter 11 einerseits und das Mahlwerksgehäuse 21 andererseits gebildet. Am Lagerabschnitt 27 und der daran angeordneten Austrittsöffnung 28 für das Mahlgut ist der Behälter 1 nicht doppelschalig ausgeführt. Hier schließt ein nicht dargestellter Schacht der Brühkammer an, der für Schalldämmung sorgt. Die Schalldämmung im gegenüberliegenden Bereich des Deckels 13 wird in der Anmeldung 2005E01366 eingehender beschrieben.

Im Betrieb ist der Innenraum 14 mehr oder weniger mit Kaffeebohnen gefüllt. Sie umgeben also den Antrieb nahezu vollständig (vgl. auch Figur 4). Über einen Trichterabschnitt 19 am Innenbehälter 12 oberhalb ihrer Abgabeöffnung 15 gelangen die Kaffeebohnen zur Aufgabeöffnung 26 im Mahlring 25. Der Schwerkraft folgend rutschen sie zwischen den Mahlring 25 und den Mahlkegel 24, wo sie zunächst gebrochen und anschließend zermahlen werden. Als Mahlgut gelangen sie in einen Aufnahmeraum 29 unterhalb des Mahlrings 25. Von dort fällt das Mahlgut durch die Zentrierscheibe 22 und die Austrittsöffnung 28 hindurch in einen nicht dargestellten Schacht zur Brühkammer. Die Speichen der Zentrierscheibe 22 (vgl. Figur 1) sind im Querschnitt dachförmig ausgebildet, damit sich kein Kaffeemehl auf ihnen ablagern kann.

Figur 5 zeigt eine Detaildarstellung aus der Figur 3, und zwar dort, wo der Deckel 13 auf den Behälter 1 trifft. Die Detaildarstellung der Figur 5 zeigt jeweils den oberen Rand des Außenbehälters 11 und des Innenbehälters 12. Der Außenbehälter 11 bildet dort einen Kragen 111 aus, der von dem Außenbehälter 11 nach innen absteht. Er reicht über den Spalt 18 hinweg bis über den oberen Rand des Innenbehälters 12 hinüber, ohne mit diesem in Kontakt zu treten. In etwa in der Fortsetzung der Wandung des Außenbehälters 11 schließt an den Kragen 111 ein Ansatz 112 an, der aus einer Verjüngung 113 und einer Rippe 114 besteht.

Der Kragen 111 überdeckt also den Spalt 18 zwischen dem Außenbehälter 11 und dem Innenbehälter 12. Dadurch wird ein Eindringen von Partikeln, die eine Schallbrücke zwischen dem Außenbehälter 11 und dem Innenbehälter 12 bilden und damit die elastische Entkoppelung deaktivieren könnten, weitgehend verhindert. Obwohl der Kragen 111 um den gesamten Innenumfang des Außenbehälters 12 umläuft, kann der Innenbehälter 12 im Außenbehälter 11 montiert werden. Der Außenbehälter 11 ist aus später genannten Gründen weich genug, so dass der Rand des Innenbehälters 12 bei der Montage hinter den Kragen 111 verschnappt werden kann.

Der Deckel 13 umfasst einen um seinen gesamten Umfang umlaufenden Randbalken 131, an dem ein Dichtungsstreifen 132 befestigt ist. Außerhalb seiner Befestigung im Randbalken 131 bildet der Dichtungsstreifen 132 in einer Richtung senkrecht zur Ebene des Deckels 13 eine Kehle 133 mit einer anschließenden Verdickung 134 aus. Die Kehle 133 und die Verdickung 134 bilden auf der jeweiligen Außenseite ein Relief, das invers zur Innenseite des Ansatzes 112 gestaltet ist. Diese Formgebung des Dichtungsstreifens 132 zusammen mit einer darauf abgestimmten Weichheit seines Materials ermöglichen es, dass der Dichtungsstreifen 132 mit dem Ansatz 112 eine luftdichte mechanische Verbindung zwischen Deckel 13 und Außenbehälter 11 eingehen kann.

Der Antrieb 3 bildet mit seinen Motor- und Getriebegeräuschen eine erste Emissionsquelle für Luft- und Körperschall. Er ist am Innenbehälter 12 starr befestigt. Durch den Einsatz der Schnecke 34 reduziert sich die Luftschallabstrahlung des Antriebs 3, weil ein Schneckengetriebe im Gegensatz zu den sonst üblicherweise verwendeten Planetengetrieben trotz des schnell laufenden Motors 33 keine nennenswerten Zahneingriffsgeräusche abstrahlt.

Vibrationen des Motors 33 werden über dessen steife Lagerung im Aufnahmeunter- und - oberteil 31, 32 unmittelbar an den Innenbehälter 12 übertragen. Er erfährt auch Erschütterungen durch das Mahlwerk 2. Die Körperschalldämmung des Motors 33 wird daher weiter unten zusammen mit der des Mahlwerks 2 beschrieben. Die Luftschallabstrahlung des schnell laufenden Elektromotors 33, insbesondere sein Kollektorgeräusch, ist durch seine luftdichte Kapselung im Aufnahmeunter- und -oberteil 31, 32 gedämmt. Eine zweite luftdichte Kapselung stellt der Behälter 1 mit dem Deckel 13 dar. Der Motor 33 ist also doppelt luftschallgedämmt. Eine Schallausbreitung der durch den Motor 33 abgegebenen Schwingungen in seine Umgebung ist somit wirkungsvoll verhindert.

Eine zweite Emissionsquelle bildet das Mahlwerk 2. Im Betrieb werden die Bohnen zwischen dem Mahlkegel 24 und dem Mahlring 25 zunächst gebrochen und anschließend fein gemahlen. Diese beiden Vorgänge zählen zu den Hauptemissionsquellen eines Kaffeevollautomaten. Auf ihrer Dämmung liegt also das Hauptaugenmerk der Konstruktion. Allerdings sind die Brech- und Mahlgeräusche nur so weit zu dämmen, dass ein Benutzer den Mahlvorgang außerhalb der Maschine akustisch noch wahrnehmen kann. Damit wird seine Erwartung an eine Geräuschentwicklung beim Betrieb des Kaffeevollautomaten erfüllt. Die Geräuschdämmung richtet sich daher vor allem auf die als unangenehm empfundenen hochfrequenten Geräusche, unter anderem des Motors 33 (s o.).

Beim Brechen und anschließenden Mahlen entstehen einerseits Erschütterungen zwischen dem Mahlkegel 24 und der Mahlscheibe 25 (Körperschall) und andererseits Brech- und Mahlgeräusche (Luftschall). Zur Dämmung des Luftschalls sind Mahlwerk 2 und Antrieb 3 innerhalb des Behälters 1 nahezu vollständig luftdicht gekapselt, der Motor 33 und das Getriebe 34, 35 sogar doppelt durch sein Gehäuse 31, 32. Mangels Luftaustauschs mit der Umgebung kann also kein Luftschall des Mahlwerks 2 und des Antriebs 3 in die Umgebung abgestrahlt werden. Insbesondere die hochfrequenten Kollektorgeräusche des Motors 33 sind so wirksam gegen Luftschallabstrahlung gedämmt.

Der Mahlkegel 24 und der Mahlring 25 sind im Mahlwerksgehäuse 21 und damit mittelbar am Innenbehälter 12 gelagert. Mit dem Mahlwerk 2 und dem Antrieb 3 sind also alle Emissionsquellen, die durch Erschütterung Körperschall erzeugen, an dem Innenbehälter 12 gelagert. Der Innenbehälter 12 stellt zusammen mit dem Mahlwerksgehäuse 21 eine Innenschale und der Außenbehälter 11 eine Außenschale des doppelschaligen Behälters 1 dar.

Die Innenschale 12, 21 ist gegenüber der Außenschale 11 schwingungstechnisch, nämlich elastisch entkoppelt, um eine Übertragung von Vibrationen von der Innenschale 12, 21 auf die Außenschale 11 zu vermeiden. Der Übertragungsweg der Erschütterungen ist daher zwischen der Innenschale 12, 21 und der Außenschale 11 unterbrochen. Diese Unterbrechung bewirkt, dass die Erschütterungen aus der Innenschale nicht auf die Außenschale 11 weiter getragen und als Luftschall abgestrahlt oder von dort auf andere Bauteile des Kaffeevollautomaten übertragen werden. Damit werden auch andere Bauteile nicht zu Vibrationen angeregt und strahlen keinen Luftschall ab.

Die elastische Entkoppelung der Innenschale 12, 21 von der Außenschale 11 erfolgt über Zwischenschaltung eines elastischen Materials, nämlich des geschäumten Polyurethans Sylomer^{®}. Es ist in Form der Lagerstreifen 41 an den Innenflächen der Behälterecken der Außenschale 11 angeordnet. Das elastische Material wirkt als Feder, die eine Masse, nämlich die Innenschale 12, 21, gegenüber einem "Untergrund", hier der Außenschale 11, abfedert. Die Vibrationen der Innenschale 12, 21 werden gleichsam von dem elastischen Material 41 "geschluckt", so dass sie nicht auf die Außenschale 11 übertragen werden.

Die Streifen 41 sind aus einem Plattenmaterial ausgestanzt, das einseitig klebend ausgerüstet ist. Die Streifen 41 sind auf der Innenseite des Außenbehälters 11 aufgeklebt, so dass sie zum Innenbehälter 12 nur in Berührkontakt stehen, ohne fest mit ihm verbunden zu sein. Eine feste Verbindung ist nicht nötig, weil der Innenbehälter 12 von vier Richtungen her gehalten ist (siehe Figur 2), dadurch also in den beiden horizontalen Freiheitsgraden festgelegt ist. Durch die fehlende dauerhafte Verbindung zwischen dem Streifen 41 und dem Innenbehälter 12 lässt sich dieser zum Beispiel zu Reparaturzwecken leicht entnehmen.

Zur Lagerung der Innenschale 12, 21 im dritten, dem vertikalen Freiheitsgrad sind elastische Lagerplatten 42 aus demselben Material wie die Streifen 41 im Bereich der Abgabeöffnung 16 an der Innenseite der Außenschale 11 aufgeklebt (siehe Fig. 3 und 4). Sie umgeben allseitig den eingezogenen Lagerabschnitt 27 des Mahlswerksgehäuses 21.

Die elastischen Streifen 41 und Platten 42 können aufgrund ihrer selbstklebenden Ausrüstung einfach montiert werden. Die dafür erforderlichen glatten Flächen bieten die Außenschale 11 und die Innenschale 12, 21. Aufgrund des konstanten Abstandes der Behälter 11, 12 voneinander können die Streifen 41 und die Platten 42 jeweils in derselben Dicke ausgeführt und daher kostengünstig aus einem Plattenmaterial ausgestanzt oder zugeschnitten werden.

Sie sind in den Eckbereichen an steifen Abschnitten der Innenschale 12, 21 und der Außenschale 11 angebracht, um eine möglichst große Wirksamkeit zu erzielen. Denn durch die geringe Nachgiebigkeit des "Untergrundes", der Außenschale 11 in ihren Eckbereichen und an ihrer Abgabeöffnung 16 können die elastischen Lager 41, 42 ihre federnde, Körperschall dämmende Wirkung entfalten. Die flächigen Abschnitte des Außenbehälters 11 zwischen den Eckbereichen dagegen sind konstruktiv "weicher" und können einer Belastung leichter nachgeben. Sie besitzen also eine größere innere Dämpfung, die den Außenbehälter 11 Schall "schlucken" lässt. Bei einer Beaufschlagung durch Luftschall lässt sich der Außenbehälter 11 nicht zu Schwingungen anregen, strahlt also selbst keinen Luftschall ab. Dadurch leistet der Außenbehälter 11 auch einen Beitrag zu einer guten Luftschalldämmung.

Diesen Effekt unterstützt der Einsatz von Santoprene^{®} als Werkstoff für den Außenbehälter 11. Dieses TPE weist eine hohe innere Dämpfung auf und ist relativ weich. Die gegenüber dem Material für den Innenbehälter 12 höhere Weichheit ist beim Außenbehälter 11 unproblematisch, weil er im Gegensatz zum Innenbehälter 12 keine nennenswerten Punktlasten, sondern nur Flächenlasten aus den Streifen 41 und Platten 42 an konstruktiv steiferen Behälterabschnitten aufnehmen muss.

Der Deckel 13 schließt ausschließlich an den Außenbehälter 11 an (siehe Fig. 5). Durch seine Verbindung mit dem oberen Rand des Außenbehälters 11 über seinen stabilen Randbalken 131 versteift er den relativ weichen Außenbehälter 11 im Bereich seiner Beladeöffnung 10. Er steht in keinem direkten Berührkontakt mit dem Innenbehälter 12. Dadurch können keine Erschütterungen und Vibrationen auf ihn übertragen werden. Eine körperschalltechnische Dämmung in der Ebene des Deckels 13 ist daher verzichtbar, ein doppelschaliger Aufbau des Deckels 13 also nicht erforderlich. Der Deckel 13 dient im Wesentlichen der Luftschalldämmung. Daher schließt er einerseits luftdicht an den Außenbehälter 11 an und besteht andererseits ebenfalls aus einem Material mit einer hohen inneren Dämpfung, das also "Schall schluckt".

### Bezugszeichenliste

- 1 -: Behälter
- 10 -: Beladeöffnung
- 11 -: Außenbehälter
- 12 -: Innenbehälter
- 13 -: Deckel
- 14 -: Innenraum
- 15 -: Abgabeöffnung des Innenbehälters 12
- 16 -: Abgabeöffnung des Außenbehälters 11
- 17 -: Montageaussparung
- 18 -: Spalt
- 19 -: Trichterabschnitt

- 2 -: Mahlwerk
- 20 -: Mahlwerksraum
- 21 -: Mahlwerksgehäuse
- 22 -: Zentrierscheibe
- 23 -: Gleitlagerscheibe
- 24 -: Mahlkegel
- 25 -: Mahlring
- 26 -: Aufgabeöffnung
- 27 -: Lagerabschnitt
- 28 -: Austrittsöffnung
- 29 -: Aufnahmeraum

- 3 -: Antrieb
- 31 -: Aufnahmeunterteil
- 32 -: Aufnahmeoberteil
- 33 -: Elektromotor
- 34 -: Schnecke
- 35 -: Schneckenrad
- 36 -: Antriebswelle
- 37 -: Stütze
- 38 -: Vierkant
- 39 -: Rändelmutter
- 41 -: Lagerstreifen
- 42 -: Lagerplatten

- 111 -: Kragen
- 112 -: Ansatz
- 113 -: Verjüngung
- 114 -: Rippe

- 131 -: Randbalken
- 132 -: Dichtungsstreifen
- 133 -: Kehle
- 134 -: Verdickung

## Patentansprüche

1. Lebensmittelmühle, insbesondere Kaffeemühle für einen Kaffeevollautomaten, mit einem Mahlgutbehälter (12), einem Mahlwerk (2), einem Mahlwerksraum (20) und einem innerhalb des Mahlgutbehälters (12) angeordneten Antriebsmotor (33), **dadurch gekennzeichnet, dass** der in einem Dämmgehäuse (31, 32) luftschallgedämmt gekapselte Motor (33) zusammen mit dem Mahlwerksraum (20) und dem Mahlgutbehälter (12) in einem gemeinsamen Dämmgehäuse angeordnet ist, dass das Dämmgehäuse in einem Gerätegehäuse elastisch gelagert ist, und dass das Dämmgehäuse doppelwandig aus einem Außengehäuse (11) und einem Innengehäuse (12) ausgebildet ist.

2. Mühle nach Anspruch 1, **dadurch gekennzeichnet, dass** das Dämmgehäuse mit einem Deckel (13) luftdicht verschließbar ist.

3. Mühle nach einem der vorangehenden Ansprüche, **dadurch gekennzeichnet, dass** die Innenseite des Dämmgehäuses zumindest bereichsweise mit einem Luftschall absorbierenden Material belegt ist.

4. Mühle nach einem der vorangehenden Ansprüche, **dadurch gekennzeichnet, dass** das Dämmgehäuse aus einem Material mit hoher innerer Dämpfung besteht.

5. Mühle nach einem der vorangehenden Ansprüche mit einer Abgabeöffnung (28) stromab des Mahlwerksraums (20) zur Abgabe des Mehls, **dadurch gekennzeichnet, dass** die Abgabeöffnung (28) zumindest zeit- oder wahlweise verschließbar ist.

6. Mühle nach einem der vorangehenden Ansprüche, **dadurch gekennzeichnet, dass** der Motor (33) am Mahlgutbehälter (12) befestigt ist.

7. Mühle nach einem der vorangehenden Ansprüche, **dadurch gekennzeichnet, dass** der Motor (33) im Mahlgutbehälter (12) elastisch gelagert ist.

8. Mühle nach einem der vorangehenden Ansprüche, **dadurch gekennzeichnet, dass** die Eigenfrequenzen des Außengehäuses (11) und des Innengehäuses (12) gegeneinander verstimmt sind.

## Claims

1. Foodstuffs mill, particularly coffee grinder for an automatic coffee machine, comprising a container (12) for material to be ground, a grinding mechanism (2), a grinding mechanism chamber (20) and a drive motor (33) arranged within the container (12) for material to be ground, **characterised in that** the motor (33), which is encapsulated in an insulating chamber (31, 32) to be insulated with respect to airborne sound, together with the grinding mechanism chamber (20) and the container (12) for material to be ground is arranged in a common insulating housing, that the insulating housing is resiliently mounted in an apparatus housing and that the insulating housing is of double-walled construction consisting of an outer housing (11) and an inner housing (12).

2. Mill according to claim 1, **characterised in that** the insulating housing is hermetically closable by a cover (13).

3. Mill according to one of the preceding claims, **characterised in that** the inner side of the insulating housing is covered at least in regions by a material absorbing airborne sound.

4. Mill according to any one of the preceding claims, **characterised in that** the insulating housing consists of a material with high internal damping.

5. Mill according to any one of the preceding claims with a delivery opening (28) downstream of the grinding mechanism chamber (20) for delivery of the grinds, **characterised in that** the delivery opening (28) is closable at least periodically or selectably.

6. Mill according to any one of the preceding claims, **characterised in that** the motor (33) is fastened to the container (12) for material to be ground.

7. Mill according to any one of the preceding claims, **characterised in that** the motor (33) is resiliently mounted in the container (12) for material to be ground.

8. Mill according to any one of the preceding claims, **characterised in that** the natural frequencies of the outer housing (11) and the inner housing (12) are matched to one another.

## Revendications

1. Moulin pour produits alimentaires, notamment moulin à café pour une machine à café entièrement automatique, comprenant un récipient pour produit moulu (12), un broyeur (2), une chambre à broyeur (20) et un moteur d'entraînement (33) disposé à l'intérieur du récipient de produit moulu (12), **caractérisé en ce que** le moteur (33) blindé dans un carter isolant (31, 32) de manière insonorisée aux bruits aériens est disposé avec la chambre à broyeur (20) et le récipient pour produit moulu (12) dans un carter isolant commun, **en ce que** le carter isolant est logé de manière élastique dans un carter d'appareil, et **en ce que** le carter isolant est formé à double paroi à partir d'un carter extérieur (11) et d'un carter intérieur (12).

2. Moulin selon la revendication 1, **caractérisé en ce que** le carter isolant peut être fermé de manière étanche à l'air au moyen d'un couvercle (13).

3. Moulin selon l'une quelconque des revendications précédentes, **caractérisé en ce que** le côté intérieur du carter isolant est occupé au moins par zones d'une matière absorbant le son aérien.

4. Moulin selon l'une quelconque des revendications précédentes, **caractérisé en ce que** le carter isolant est constitué d'une matière à assourdissement intérieur élevé.

5. Moulin selon l'une quelconque des revendications précédentes comprenant une ouverture de décharge (28) en aval de la chambre de broyeur (20) pour décharger la mouture, **caractérisé en ce que** l'ouverture de décharge (28) peut être fermée au moins temporairement ou facultativement.

6. Moulin selon l'une quelconque des revendications précédentes, **caractérisé en ce que** le moteur (33) est fixé sur le récipient pour produit moulu (12).

7. Moulin selon l'une quelconque des revendications précédentes, **caractérisé en ce que** le moteur (33) est logé de manière élastique dans le récipient pour produit moulu (12).

8. Moulin selon l'une quelconque des revendications précédentes, **caractérisé en ce que** les fréquences propres du carter extérieur (11) et du carter intérieur (12) sont décalées l'un par rapport à l'autre.
